# EUROPEAN PATENT APPLICATION

(11) **EP 4 745 089 A1**
(43) Date of publication of application: **20.05.2026**
(21) Application number: 24212559.9
(22) Date of filing: 13.11.2024
(51) Int. Cl.: C01G 53/05, C01G 53/40, C01G 53/42, C01G 53/44, C01G 53/84

(54) **METHOD FOR PREPARING A PRECURSOR FOR CATHODE ACTIVE MATERIAL FOR SECONDARY BATTERIES**

(71) Applicant: Umicore Battery Materials Finland Oy, 67900 Kokkola (FI)
(72) Inventor: NIITTYKOSKI, Janne, 67900 Kokkola (FI); VEHKAMÄKI, Ville, 67900 Kokkola (FI)
(74) Representative: Umicore RDI Patent Department

(57) **Abstract**

A method for manufacturing a particulate material comprising metal M' -based compound, being hydroxide, oxyhydroxide, oxide, or any combination thereof, wherein the metal M' is presented by Ni_{1-x-y-z}MnₓCo_{y}A_{z}, wherein 0.30≤1-x-y-z ≤0.99, 0.01≤x≤0.85, 0.01≤y≤0.40, A comprising Al with 0.001≤z≤0.100; and the method comprises carrying out a co-precipitation process by combining and mixing a precipitant, metal salts corresponding to metal M', and optionally a complexing agent, all in the form of aqueous solutions, to form a reaction mixture under reaction conditions, said reaction conditions including a non-oxidative environment, a temperature of the reaction mixture of 75-85°C, and a pH value of the reaction mixture of 10.0-12.5 as measured at 20°C, for 17-24 hours, until a slurry with a liquid phase and a solid phase containing particles with a median particle size D50 of 8-20 µm and a solid content of at least 750 g/L in the slurry is obtained.

## Description

### TECHNICAL FIELD

In general, the present disclosure relates to methods for manufacturing a precursor for cathode active material for secondary batteries or lithium-ion batteries, as well as the resulting precursors and the resulting cathode active material.

### BACKGROUND

Lithium-ion secondary batteries typically comprise a negative electrode (anode), an electrolyte, and a positive electrode (cathode) containing a lithium-transition metal oxide as the active material for lithium insertion and desorption. These cathode active materials (CAM) are commonly produced from transition-metal hydroxides, oxides, or oxyhydroxides, collectively known as precursors (pCAM). These precursors are usually synthesized through co-precipitation processes in a reaction vessel, which involve mixing a metal salt solution with an alkali solution in the presence of a complexing agent. Commonly used transition metals include nickel, manganese, and cobalt.

As the physical and chemical properties of cathode active materials are closely related to their precursors, it is essential to manufacture these precursors with predetermined properties that meet the performance requirements of the cathode active material. These properties include sphericity, tap density, specific surface area, and porosity within specified ranges. For instance, trends of pCAM properties believed to contribute a better CAM performance include better sphericity, higher tap density, higher specific area, low span value, low impurities and etc. However, achieving these properties all at once requires a delicate manufacturing process. For instance, in order to achieve the required properties, the growth time for precursor particles is usually lengthy, and the solid content of the particles in the reactor vessel is usually kept low, leading to inefficient production.

Therefore, it is desirable to efficiently manufacture the precursors with the predetermined properties. Consequently, there is a need to improve the manufacturing process of precursors.

### SUMMARY

An object of the present disclosure is to provide improved methods for preparing cathode active precursor material.

In a first aspect, the present disclosure provides a method for manufacturing a particulate material as precursor for cathode active material for secondary batteries. It is provided a method for manufacturing a particulate material comprising metal M' -based compound, being hydroxide, oxyhydroxide, oxide, or any combination thereof, wherein the metal M' is presented by Ni_{1-x-y-z}MnₓCo_{y}A_{z}, wherein 0.30≤1-x-y-z ≤50.99, 0.01≤x≤0.85, 0.01≤y≤0.40, A comprising Al with 0.001≤z≤0.100; and the method comprises carrying out a co-precipitation process by combining and mixing a precipitant, metal salts corresponding to metal M', and optionally a complexing agent, all in the form of aqueous solutions, to form a reaction mixture under reaction conditions, said reaction conditions including a non-oxidative environment, a temperature of the reaction mixture of 75-85°C, and a pH value of the reaction mixture of 10.0-12.5 as measured at 20°C, for 17-24 hours, until a slurry with a liquid phase and a solid phase containing particles with a median particle size D50 of 8-20 µm and a solid content of at least 750 g/L in the slurry is obtained.

It is now found that the process features outlined in this disclosure contribute to a high yield of narrow span precursor material with low alkali impurities and desirable specific surface area and porosity, thereby achieving both quality and quantity simultaneously.

Thus, in a second aspect, the present disclosure provides a particulate material as precursor for cathode active material for secondary batteries. It is provided a particulate material comprising metal M' -based compound, being hydroxide, oxyhydroxide, oxide, or any combination thereof, wherein the metal M' is presented by Ni_{1-x-y-z}MnₓCo_{y}A_{z}, wherein 0.30≤1-x-y-z≤0.99, 0.01≤x≤0.85, 0.01≤y≤0.40, A comprising Al with 0.001≤z≤0.100; and wherein the particulate material has a median particle size D50 of 8-20 µm, a specific surface area of at least 4 m²/g as determined by BET, and a total pore volume of more than 0.01 cm³/g as determined from nitrogen adsorption measurement and calculated according to the BJH.

Various embodiments of the present disclosure are disclosed in the claims and the description. The embodiments and examples recited in the claims and description are freely combinable with one another, unless otherwise expressly stated. Throughout the disclosure, where numerical ranges are given, the ranges include endpoint values unless otherwise expressly stated.

### BRIEF DESCRIPTION OF THE FIGURES

Figure 1 is a SEM image of an explanatory particulate material manufactured according to the present disclosure.
Figure 2 is a SEM image of a comparative example.

### DETAILED DESCRIPTION

While this disclosure describes several embodiments, it will be understood by those skilled in the art that various changes can be made, and equivalents can be substituted for elements thereof without departing from the scope of the disclosed embodiments. In addition, many modifications can be made to adapt a particular situation or material to the teachings of this disclosure without departing from the scope thereof. Therefore, this disclosure is not intended to be limited to the particular embodiments disclosed as the best mode contemplated for carrying out this disclosure. It should also be understood that the embodiments disclosed herein are to be considered only in a descriptive sense and not for purposes of limitation. Descriptions of features or aspects of each example should be considered as available for other similar features or aspects of other embodiments.

The term "comprising", as used herein and in the claims, should not be interpreted as being restricted to the means listed thereafter; it does not exclude other elements or steps. It needs to be interpreted as specifying the presence of the stated features, integers, steps, or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present disclosure, the only relevant components of the composition are A and B. Accordingly, the terms "comprising" and "including" encompass the more restrictive terms "consisting essentially of" and "consisting of".

In this specification, if any numerical ranges are provided, the ranges include also the upper and lower end values.

In this specification, the term "at least" encompasses the concept of "equal to and/or more than", and the term "at most" encompasses the concept of "equal to and/or less than".

The expression "at least one of Item A, Item B, and Item C" or alike means that at least one of the three items (Item A, Item B, or Item C) is included or present. It could be any one of them, any two of them, or all three of them.

In the present disclosure, solutions are preferably aqueous solutions, when applicable.

As used herein, the term "and/or," when used in a list of two or more items, means that any one of the listed items can be employed by itself, or any combination of two or more of the listed items, can be employed.

Relational terms, such as first and second, top and bottom, and the like, are used solely to distinguish one entity or action from another entity or action, without necessarily requiring or implying any actual such relationship or order between such entities or actions.

It must be noted that, as used in this specification and the appended claims, the singular forms "a," "an," and "the" include plural referents unless the context clearly dictates otherwise.

The terms "ammonia (NH₃) concentration in a solution", "concentration of NH_{3(aq)}" or the like as used herein refers to the quantified amount of ammonia present in an aqueous solution. This concentration is expressed in grams per liter (g/l) and is determined through titration conducted at room temperature, typically around 20°C. In the present disclosure all given pH values refer to values which are measured at a temperature of 20°C, unless otherwise stated.

The effective volume of a reactor vessel refers to the portion of the total volume that is actively involved in the chemical reaction process. This is different from the total volume, which includes areas that might not be directly involved in the reaction, such as dead zones or areas occupied by internals. For example, a 4 L reactor vessel may have an effective volume of around 3.65 L, and a 10 L reactor vessel may have and effective volume of around 8.75 L.

The particulate material as described in this disclosure can serve as a precursor for the cathode active material. Thus, the term 'precursor' is used interchangeably with 'particulate material' within this context. The particulate material serving as the precursor is composed of secondary particles to which primary particles are aggregated, or composed of the primary particles and the secondary particles.

The present disclosure provides a method for manufacturing a particulate material as precursor for cathode active material for secondary batteries. It is provided a method for manufacturing a particulate material comprising metal M' -based compound, being hydroxide, oxyhydroxide, oxide, or any combination thereof, wherein the metal M° is presented by Ni_{1-x-y-z}MnₓCo_{y}A_{z}, wherein 0.30≤1-x-y-z ≤50.99, 0.01≤x≤0.85, 0.01≤y≤0.40, A comprising Al with 0.001≤z≤0.100; and the method comprises carrying out a co-precipitation process by combining and mixing a precipitant, metal salts corresponding to metal M', and optionally a complexing agent, all in the form of aqueous solutions, to form a reaction mixture under reaction conditions, said reaction conditions including a non-oxidative environment, a temperature of the reaction mixture of 75-85°C, and a pH value of the reaction mixture of 10.0-12.5 as measured at 20°C, for 17-24 hours, until a slurry with a liquid phase and a solid phase containing particles with a median particle size D50 of 8-20 µm and a solid content of at least 750 g/L in the slurry is obtained.

The precursor according to the present disclosure may be presented by a general formula Ni_{1-x-y-z}MnₓCo_{y}A_{z}Oᵥ(OH)₂₋ᵥ, wherein 0≤v≤2. The precursor according to the present disclosure may also be presented as M-Oᵥ(OH)₂₋ᵥ, wherein M is mixed metals comprising:
- Ni in a content 1-x'-y'-z', wherein 30.0 ≤ 1-x'-y'-z' ≤ 99.0 mol%, relative to M,
- Mn in a content x', wherein 1.0 ≤ x' ≤ 85.0 mol%, relative to M,
- Co in a content y', wherein 1.0 ≤ y' ≤ 40.0 mol%, relative to M,
- A comprising Al and in a content z', 0.1≤z'≤ 10.0 mol%, relative to M;
wherein x', y', z' are measured by ICP-OES. It can be understood that the expression ≤0 in the chemical formulas includes the absence of an element, and that the expression of O*ᵥ*(OH)₂₋ᵥ, wherein 0 ≤ v ≤ 2, refers to hydroxide, oxyhydroxide, oxide or any combination thereof. A represents at least one chemical element. A comprises Al and may further comprise one or more elements selected from Ba, Ca, Ce, Cr, La, Mg, Mo, Nb, Sr, Ti, Y, V, W, and Zn. Alternatively, A may consist of Al.

The combined characteristics according to the present disclosure, particularly the reaction conditions, the addition of Al, the reaction duration and the solid content, contribute to a high yield of narrow span precursor material with low alkali impurities and desirable specific surface area and porosity, thereby achieving both quality and quantity simultaneously. Specifically, the claimed range of reaction duration and solid content ensures a high yield without sacrificing the properties, and incorporating aluminum within the specified range during the precipitation process further increase the specific surface area and porosity of the precursor particles, as well as a lower span value and reduced alkali impurity levels.

The co-precipitation process may be carried out in a stirred tank reactor having a reaction vessel equipped with means for stirring and feeding the reaction solutions. The co-precipitation process may be carried out in a batch-operated stirred tank reactor or a continuous stirred tank reactor, or in combination. For example, the co-precipitation may be carried out in a multi-step manner, where a seed slurry is first prepared, advantageously in a continuously operated stirred tank reactor, followed by one or more process steps in which the particles of the seed slurry are further grown to their target median particle size D50 in a batch-operated stirred tank reactor or reactors. A stirred tank reactor may be equipped with a concentrator, also known as a clarifier, which is a filtering unit or device connected to a suction system. Such a concentrator can remove a fraction of mother liquor from the reactor during the precipitation processes, retaining the particles within the reactor to increase the solid content. In a precipitation reaction, the mother liquor is the liquid phase after the solid precipitate has been formed. This liquid phase may still contain some of the dissolved substances (solutes) that were not fully precipitated, as well as any impurities that were present in the original mixture.

In the co-precipitation process, several precipitants can be used. A precipitant in the form of an aqueous solution may be, for example, an alkaline solution, such as an aqueous solution comprising an alkali metal hydroxide like sodium hydroxide (NaOH). In some embodiments, the alkaline solution comprises NaOH, for example in a concentration of 100-300 g/L, preferably 150-250 g/L. Using higher concentrations of NaOH typically enhances process efficiency by increasing throughput and reducing water usage. However, excessively high concentrations might lead to undesirable nucleation or agglomeration.

According to the present disclosure, aluminum (Al) salt in the form of an aqueous solution is provided during the co-precipitation process. Depending on the source of aluminum, aluminum salt in the form of aqueous solution may be provided together with the solution comprising the precipitant, the solution comprising other metal salts including Ni, Mn, and Co, or as a separate solution. As an example, the aluminum salt may be sodium aluminate. In this case, a solution of sodium aluminate can be mixed with the alkaline solution containing the precipitant and fed together into the reactor, or the solution of sodium aluminate can be fed separately. However, it is not suitable to feed sodium aluminate together with the metal salt solution comprising Ni, Mn and Co sulfates, which are commonly used in practice, as sodium aluminate might react with sulfate to form a precipitate. Another example of aluminum salt is aluminum sulfate, which is then suitable to be fed together with other metal sulfate solutions.

The addition of Al source combined with the process features outlined in this disclosure have now been found to reduce the primary particle thickness and reduce alkali impurities, particularly alkali metals, in the manufactured precursor. Without wishing to be bound to any theory, it is believed that the addition of Al contributes to the thinning of primary particles. Here, thinning the primary particles means that the growth in the thickness direction is slower compared to the reference sample, resulting in thinner particles. Consequently, the aspect ratio of these thinner primary particles is higher than that of the reference sample. Thinner primary particles have a larger surface area-to-volume ratio, which may enhance the exposure of alkali impurities to the washing medium. This increased exposure may allow for more effective removal of surface alkali impurities compared to thicker primary particles, where alkali impurities might be more embedded and harder to reach. Thinning of primary particles also lead to an increase of specific surface area and/or porosity. In addition, thinning of primary particles can also be observed through their morphology under SEM. Thicker primary particles typically appear more cubic in shape, while thinner primary particles tend to form more needle-like structures or a mixture of needles and flakes.

In some embodiments, in the formula Ni_{1-x-y-z}MnₓCo_{y}A_{z}, 0.0015≤z, for example 0.002≤z or 0.0025≤z, more preferably 0.0035≤z, for example 0.004≤z or 0.0045≤z, even more preferably 0.005≤z, and most preferably 0.010≤z, for example 0.020≤z, 0.025≤z or 0.030≤z; and/or z≤0.080, preferably z≤0.060, more preferably z≤0.040. In some embodiments, the amount of added aluminum (Al) source is such that the molar ratio of Al in the manufactured precursor is at least 0.10 mol%, for example, at least 0.15 mol% or at least 0.25 mol%. Preferably, the molar ratio of Al in the manufactured precursor is at least 0.30 mol%, as it is observed that the alkali impurities attached to the manufactured precursor may already be reduced by half compared to an example without the addition of Al. More preferably, the molar ratio of Al in the manufactured precursor is at least 0.45 mol%, for example at least 0.50 mol%. This increases noticeably the specific surface area and/or thin the primary particles and/or increase the total pore volume of the manufactured precursor, each of which may improve the performance of the cathode active material made from such a precursor. Even more preferably, the molar ratio of Al in the manufactured precursor is at least 2.00 mol%, for example at least 2.50 mol%, or at least 3.00 mol%. The upper limit of the added amount of Al is not particularly restricted, as long as the effects of the present disclosure are not impaired. Preferably the molar ratio of Al in the manufactured precursor is at most 10.00 mol%, for example at most 8.00 mol%, or at most 6.00 mol%, to ensure the structural stability of the precursor and the cathode material made thereof.

In some embodiments, the co-precipitation may include admixing a complexing agent solution. A complexing agent used in the co-precipitation process may contribute to control of precipitation rate and ensure a uniform distribution of metal ions and controlled particle growth. Complexing agents may also reduce impurities in the precipitate by selectively binding to unwanted ions or minimizing the incorporation of impurities into the precipitate. In some embodiments, ammonium ion-containing solution is used as a complexing agent which may include, but not be limited to, NH₄OH, (NH₄)₂SO₄, NH₄NO₃, NH₄Cl, CH₃COONH₄, NH₄CO₃, or a combination thereof. For example, the ammonium ion-containing solution may be an ammonia aqueous solution, also known as ammonia water, ammonium hydroxide, ammonia liquor, aqua ammonia, or aqueous ammonia, i.e. a solution of ammonia in water. It can be denoted by the symbols NH_{3(aq)}. In some embodiments, the co-precipitation can be conducted under the condition so, that the NH_{3(aq)} concentration in the reaction mixture is kept 5-12 g/L, depending on the target pH of the reaction. To further optimize the co-precipitation process, the ammonia aqueous solution may be provided such that, at the beginning of the co-precipitation process until the precipitate median particle size (D50) reaches half of the target size, the NH_{3(aq)} concentration in the reaction mixture is kept lower, for example, 5-9 g/L. This may contribute to reducing undesirable agglomeration. The concentration may then be gradually or stepwise increased to, for example 10-12 g/L. This may help avoid nucleation.

It is beneficial to carry out the co-precipitation process so that the target particle size of 8-20 µm and a solid content of at least 750 g/L are reached within the 17-24 hours. These combined ranges, together with the other process characteristics outlined in the present disclosure, ensure a good yield and efficiency, and result in a high-quality of the product. A higher temperature, such as 75-85°C, may increase the rate of precipitation and influence the size of the precipitate. In addition, the alkalinity of the solution, such as 10.0-12.5, may impact the solubility of the precipitating compounds. Furthermore, the reaction duration for which the reactants are allowed to interact can influence the completeness of the precipitation reaction and the characteristics of the precipitate. The solid content in the reaction mixture or slurry can be adjusted by various parameters, such as the concentration of the reactant, the flow rate of the reaction solutions, vessel dimensions, and residence time. These adjustments may vary depending on operational and equipment design and can be implemented by a skilled person in the field without undue burden. A higher solid content generally indicates a higher yield and process efficiency. However, excessively high solid content can negatively impact mixing efficiency and may cause clogging or damage to the equipment. Therefore, it is preferable to adjust the solid content so that it does not exceed 1200 g/L, and ideally, it should be kept below 1000 g/L.

Also, equipping the reactor with a concentrator can help adjust the solid content, e.g. by gradually removing some of the solvent to increase the concentration of the solid phase in the slurry. Thus, in some embodiments, during the co-precipitation process, a portion of the liquid phase of the slurry, preferably in several fractions, is withdrawn from the reactor vessel. Preferably, the aqueous solutions are supplied continuously , and the portion of the liquid phase is withdrawn continuously or discontinuously, such as periodically.

Other factors may also affect the efficiency of the precipitation, such as concentration of reactants and the flow rate of the reactant solution(s) feeding into the reactor. A higher flow rate may enhance the reaction rate due to increased frequency of collisions between reactant molecules, while a lower flow rate may ensure longer residence times, allowing the reaction to proceed more completely, as well as better control over the precipitation process and result in a more uniform precipitate. The dimensions of the reaction vessel may also play a role. Especially when the precipitation reaction is carried out in a continuous mode, or semi-batch mode wherein the mother liquor is withdrawn during the co-precipitation process, the dimension of the reactor and the flow rate together may affect the residence time distribution of the reactants. In some embodiments, wherein the aqueous solutions are supplied simultaneously into a reaction vessel having an effective volume (V), the Ni, Mn, and Co salts are supplied at an average flow rate (R) such that a ratio of the average flow rate (R), expressed in moles per hour (mol/hr) to the effective volume (V) of the reactor vessel, expressed in liters (L), is at least 0.25, preferably 0.30, more preferably 0.35 (mol/hr/L). The unit "mol/hr" (moles per hour) is used to express the rate at which a substance is added per time. It can be calculated using the concentration of the substance in a solution (g/L), the molar mass of the substance (g/mol), and the rate of feeding the solution (L/hr). Naturally, the feed of the precipitant is adjusted correspondingly for the precipitation to complete.

The method according to the present disclosure may further comprise prior to step a), providing a slurry having seed particles have a median particle size D_{c}50 of 1.5-6.0 µm, being metal M_{c}' -based compound, being hydroxide, oxyhydroxide, oxide, or any combination thereof, wherein the metal M_{c}' is presented by Ni_{1-cx-cy-cz}Mn_{cx}Co_{cy}A'_{cz}, wherein 0.30≤1-cx-cy-cz≤0.99, 0≤cx≤0.85, 0≤cy≤0.40, and 0≤cz≤0.05. Preferably A' is a dopant, more preferably A' comprises at least one element selected from the group consisting of Al, Ti, V, Mg, Cr, Ca, Zr, Nb, Mo, Hf, Ta, and W. Seed particles may contain aluminum (Al) or be free of aluminum, provided that the total aluminum content of the precursor falls within the specified range. Seed particles act as nuclei around which the precipitate forms, which is usually referred as growth of the particles. Seed particles can be introduced intentionally to control the size and distribution of the precipitate, or they can form spontaneously in the solution. By providing a starting point for the formation of the solid, seed particles help to accelerate the precipitation process and ensure that it occurs more uniformly.

In a second aspect, the present disclosure provides a particulate material as precursor for cathode active material for secondary batteries. It is provided a particulate material comprising metal M' -based compound, being hydroxide, oxyhydroxide, oxide, or any combination thereof, wherein the metal M' is presented by Ni_{1-x-y-z}MnₓCo_{y}A_{z}, wherein 0.30≤1-x-y-z≤0.99, 0.01≤x≤0.85, 0.01≤y≤0.40, A comprising Al with 0.001≤z≤0.100; and wherein the particulate material has a median particle size D50 of 8-20 µm, a specific surface area of at least 4 m²/g as determined by BET, and a total pore volume of more than 0.01 cm³/g as determined from nitrogen adsorption measurement and calculated according to the BJH. In some embodiments, 0.50≤1-x-y-z, more preferably 0.60≤1-x-y-z, even more preferably 0.75≤1-x-y-z, and most preferably 0.85≤1-x-y-z.

The cathode active material precursor particles can be obtained by the method according to the first aspect of the present disclosure.

The cathode active material precursor is a secondary particle in which primary particles are agglomerated. As mentioned above, it is believed that the addition of Al contributes to the thinning of primary particles. Thinning of primary particles also leads to an increase of specific surface area and/or porosity. It is generally observed that higher specific surface area and porosity of the precursor contribute to better performance of the cathode active material. It is believed that this is because a higher specific surface area provides more active sites for electrochemical reactions, enhancing the material's capacity and rate performance. Additionally, increased porosity facilitates better ion transport and electrolyte penetration, improving the overall efficiency and stability of the cathode material. Furthermore, the thinner primary particles tend to form more needle-like structures or a mixture of needles and flakes. It is believed that performance of the cathode active material, such as capacity and cycle life, may be improved by using a precursor in which the primary particles are in the form of a needle or a mixture of needles and flakes.

The upper limit of the specific surface area is not particularly restricted, provided that the effects of the present disclosure are not compromised. In some embodiments, the specific surface area is at most 25 m²/g, for example at most 20 m²/g. On the other hand, from the perspective of processing the precursor to cathode active material, it is sometimes preferable that the specific surface area and/or porosity is not excessively high. For example, in some applications, coating with a compound can enhance the stability of the cathode active material. However, a high specific surface area may lead to a rough particle surface, which can reduce the effectiveness of the coating. Thus, in some embodiments, the specific surface area is at most 12 m²/g, preferably at most 10 m²/g, as determined by BET. Likewise, excessively high porosity might introduce several challenges that degrade the overall efficiency, stability, and safety of the cathode active material. In some embodiments, the total pore volume is at most 0.05 cm³/g, preferably at most 0.04 cm³/g, as determined from nitrogen adsorption measurement and calculated according to the BJH.

As previously noted, the addition of Al is believed to contribute to the thinning of primary particles, which subsequently reduce alkali impurities, particularly alkali metals, in the precursor. In some embodiments, the particulate material has a Na content of less than 500 g/L, preferably less than 400 g/L, more preferably less than 300 g/L, even more preferably less than 200 g/L, and most preferably less than 100 g/L.

In some embodiments, the particulate material according to the present disclosure has a span value, calculated by (D90-D10)/D50, of at most 0.30, preferably at most 0.28, more preferably at most 0.26. Such a narrow span of particles indicates a uniform particle size distribution. This means that the particles in the sample are very similar in size, which can have several implications, including consistent performance, improved process control, enhanced material properties, and so on.

The precursor particles obtained according to the present disclosure may be directly used for manufacturing the cathode active material. The powderous precursor can be mixed with a lithium source so as to obtain a mixture. The mixture is sintered at a temperature between 650°C and 1000°C. Optionally, a heat treatment at a temperature of 105 °C to 750 °C can be performed before the mixing.

Thus, the present disclosure also concerns a use of the precursor obtainable by a method according to the first aspect of the present disclosure, and a use of a precursor according to a further aspect of the present disclosure, for manufacturing a positive electrode active material for secondary batteries.

### EXPERIMENTAL ANALYSIS USED IN THE EXAMPLES AND THE COMPARATIVE EXAMPLES

The following analysis methods are used in the Examples and the Comparative Example:

### A) pH analysis

pH value of a sample was measured by a 780 Metrohm meter calibrated with pH 7 and pH 13 standards. The sample was cooled to 20°C and the pH was measured from the sample by lowering the pH electrode into the sample and waiting for the pH reading to be leveled.

### B) NH_{3(aq)} concentration analysis

The NH_{3(aq)} concentration was measured from a reactor sample by end point titration using an instrument of Metrohm 848 Titrino Plus. One milliliter of sample solution was added to a titration vessel. 30-40 ml of deionized water and 1 ml of 1M NaOH were added. Sample was titrated to the end point by 0.1M HCl.

### C) Particle size distribution (PSD) analysis

The PSD is measured using a Malvern Mastersizer 3000 with Hydro MV wet dispersion accessory after dispersing examples as described herein below of positive electrode active material powders in an aqueous medium. To improve the dispersion of the positive electrode active material powder examples, sufficient ultrasonic irradiation and stirring is applied, and an appropriate surfactant is introduced. D10, D50, D90 are defined as the particle size at 10%, 50%, and 90%, respectively, of the cumulative volume % distribution. D90 signifies the point in the size distribution, up to and including which, 90% of the total volume of material in the sample is 'contained'. For example, if the D90 is 10µm, this means that 90% of the sample has a size of 10µm or smaller. The definition for D50 is then the size point below which 50% of the material is contained. Similarly, the D10 is that size below which 10% of the material is contained. This description has long been used in size distribution measurements by laser diffraction. The span of a volume-based size distribution is defined as Span = (D90 - D10)/D50 and gives an indication of how far the 10 percent and 90 percent points are apart, normalized with the midpoint.

### D) Inductively Coupled Plasma Optical Emission Spectrometry (ICP-OES) measurement

The positive electrode active material examples as described herein below are measured by the Inductively Coupled Plasma - Optical Emission Spectrometry (ICP-OES) method using an Agilent ICP 720-OES. 1 gram of a powder sample of each example is dissolved into 50 mL high purity hydrochloric acid in an Erlenmeyer flask. The flask is covered by a watch glass and heated on a hot plate at 380°C until complete dissolution of the sample. After being cooled to room temperature, the solution and the rinsing water of Erlenmeyer flask are transferred to a 250 mL volumetric flask. Afterwards, the volumetric flask is filled with DI water up to the 250 mL mark, followed by complete homogenization. An appropriate amount of solution is taken out by pipette and transferred into a 250 mL volumetric flask for the 2nd dilution, where the volumetric flask is filled with internal standard and 10% hydrochloric acid up to the 250 mL mark and then homogenized. Finally, this solution is used for ICP-OES measurement. The contents/compositions of Ni, Mn, and Co are expressed as mol% of the total of these contents. The content of Na is expressed as grams per ton (g/t) or parts per million (ppm).

### E) Scanning Electron Microscopy (SEM) analysis

The morphology, the primary particle size, aspect ratio, length and thickness, degree of radial orientation, and void area of the positive electrode active material and the precursor are analyzed by using the images from a scanning electron microscopy (SEM) technique. The measurement is performed with a JEOL JSM 7100F under a high vacuum environment of 9.6x10-5 Pa at 25 °C.

### F) Surface area analysis

The specific surface area (SSA) of the samples, including cathode active material precursors and final products, was measured using the standard Brunauer-Emmett-Teller (BET) method according to ISO 9277, performed on a Quantachrome^{®} Autosorb instrument. A powder sample was placed in the sample tube and heated at 90 °C under nitrogen (N2) gas for 2 hours to remove adsorbed species. Before the BET measurement, the sample was degassed at 200 °C for 6 hours to eliminate moisture completely. The instrument conducted the nitrogen adsorption test at 77 K. By obtaining the nitrogen isothermal absorption/desorption curve, the total specific surface area of the sample in m²/g was derived.

### G) Tap density analysis

The tap density (TD) measurement was conducted using a J. Engelsmann Stamping Volumeter STAV II instrument. A graduated measuring cylinder (100 ml) containing the sample (with a mass W, approximately 60-120 g) was mechanically tapped 5000 times, following the ASTM B-527 tap density measurement procedure. The initial powder volume was recorded and tapping continued until no further change in volume (V in cm³) or mass (W in gram) was observed. The TD was calculated as TD = W/V.

### H) Total pore volume analysis

The total pore volume of samples was measured by a standard Pore size distribution and porosity method according to ISO 15901 and carried out on a Quantachrome^{®} Autosorb Nova 4200e analyzer and determined from nitrogen adsorption measurement and calculated according to the BJH (after Barrett, Joyner, and Halenda) method.

### EXAMPLES AND COMPARATIVE EXAMPLES

The present disclosure is further illustrated in the following examples and comparative examples.

### Example 1

A starting solution was prepared by placing 2600 mL of DI water, 45 mL of 220 g/L NH_{3(aq)}, and 350 mL of 95-150 g/L aqueous slurry comprising seed particles being hydroxide of Ni, Mn, and Co in a molar ratio of 92:3:5 and having D50 of 6.0 µm were added in a reactor vessel with an effective volume of 3.65 L. The vessel was equipped with a turbine impeller for stirring and a concentrator (i.e. a filtering device) for withdrawing mother liquor from the reactor. The pH of the starting solution was adjusted to 11.5 by the addition of a NaOH solution, followed by heating and maintaining the temperature at 80°C throughout the process. Nitrogen gas was supplied at 0.2 L/min through the reactor to prevent oxidation during precipitation reaction.

Next, a precipitation reaction was performed by continuously adding 120 g/L metal sulfate solution comprising Ni, Mn, and Co (in a stoichiometric molar ratio, Ni:Mn:Co of about 92:3:5), a 220 g/L ammonia solution, and an alkaline solution comprising 220 g/L NaOH and a pre-determined amount of 190 g/L sodium aluminate, while mixing. The amount of sodium aluminate was determined so, that the molar ratio of Al in the final precipitate was 0.5 mol%. A feed rate of the metal sulfate solution was about 0.23 L/h in the beginning and increased continuously to keep the particle growth rate constant at 0.3-0.4 µm/h. The average feed rate of the metal solution was 0.67 L/h. During the reaction, the pH value of the reaction mixture in the reactor vessel was kept steady at 11.8 ± 0.1 and the NH_{3(aq)} concentration in the reaction mixture was kept at 5-10 g/L. A reactor sample of the reaction mixture was taken every two hours and the D50 was measured from it. The reaction was stopped when the D50 of the reactor sample reached approximately the target value of 13.2 µm. The duration of the precipitation process was 19.5 hours. A part of the mother liquor of the reaction mixture was withdrawn from the reactor during the process by using a concentrator, and a solid content of the reaction mixture, which is an aqueous slurry comprising hydroxide particles, in the reactor vessel was around 800 g/L in the end of the process.

The obtained slurry was washed and filtered, and the wet cake obtained was dried for 24 hours in an oven at 120°C under nitrogen gas. The dried sample was analyzed and the results are shown in Table 1.

### Example 2

An aqueous slurry was prepared in the same manner as Example 1 except: The amount of sodium aluminate was determined so, that the molar ratio of Al in the final precipitate was 2.0 mol%. The average feed rate of the metal solution was 0.68 L/h.

The duration of the precipitation process was 20 hours. A solid content of the reaction mixture was around 850 g/L in the end of the process.

The obtained slurry was washed and filtered, and the wet cake obtained was dried for 24 hours in an oven at 120°C under nitrogen gas. The dried sample was analyzed and the results are shown in Table 1.

### Example 3

An aqueous slurry was prepared in the same manner as Example 1 except: The amount of sodium aluminate was determined so, that the molar ratio of Al in the final precipitate was 2.5 mol%. The average feed rate of the metal solution was 0.68 L/h.

The duration of the precipitation process was 20 hours. A solid content of the reaction mixture was around 850 g/L in the end of the process.

The obtained slurry was washed and filtered, and the wet cake obtained was dried for 24 hours in an oven at 120°C under nitrogen gas. The dried sample was analyzed and the results are shown in Table 1.

### Example 4

An aqueous slurry was prepared in the same manner as Example 1 except: The amount of sodium aluminate was determined so, that the molar ratio of Al in the final precipitate was 3.0 mol%. The average feed rate of the metal solution was 0.68 L/h.

The duration of the precipitation process was 20 hours. A solid content of the reaction mixture was around 850 g/L in the end of the process.

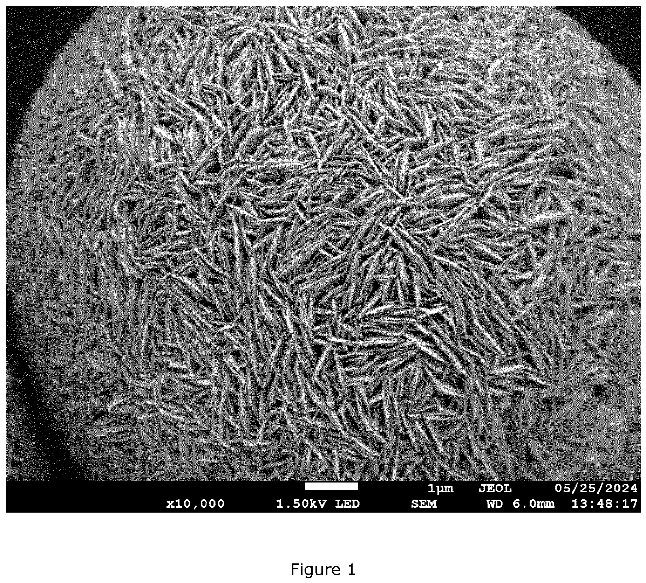

The obtained slurry was washed and filtered, and the wet cake obtained was dried for 24 hours in an oven at 120°C under nitrogen gas. The dried sample was analyzed and the results are shown in Table 1. A SEM image of the example was taken and shown in Fig. 1.

### Comparative Example 1

An aqueous slurry was prepared in the same manner as Example 1 except: No sodium aluminate was added. The average feed rate of the metal solution was 0.57 L/h.

The duration of the precipitation process was 16 hours. A solid content of the reaction mixture was around 600 g/L in the end of the process.

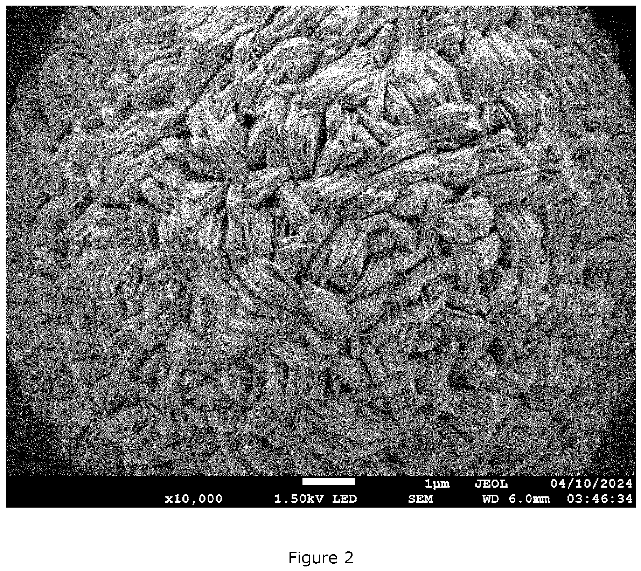

The obtained slurry was washed and filtered, and the wet cake obtained was dried for 24 hours in an oven at 120°C under nitrogen gas. The dried sample was analyzed and the results are shown in Table 1. A SEM image of the example was taken and shown in Fig. 2.

**Table 1**

| Sample ID | Particle size D50 [µm], measured | Span | Specific surface area (BET) [m²/g] | Tap density [g/cm³] | Na (g/t) | Total pore volume (cm³/g) |
|---|---|---|---|---|---|---|
| EX1 | 13.20 | 0.19 | 4.79 | 1.94 | 173.00 | 0.02 |
| EX2 | 13.30 | 0.19 | 5.81 | 1.90 | 71.00 | 0.02 |
| EX3 | 13.30 | 0.22 | 6.94 | 1.94 | 99.00 | 0.03 |
| EX4 | 13.00 | 0.25 | 7.20 | 1.83 | 71.00 | 0.03 |
| CEX1 | 13.20 | 0.31 | 3.61 | 1.98 | 514.00 | 0.01 |

## Claims

1. A method for manufacturing a particulate material comprising metal M' -based compound, being hydroxide, oxyhydroxide, oxide, or any combination thereof, wherein the metal M' is presented by Ni_{1-x-y-z}MnₓCo_{y}A_{z}, wherein 0.30≤1-x-y-z ≤50.99, 0.01≤x≤0.85, 0.01≤y≤0.40, A comprising Al with 0.001≤z≤0.100; and
the method comprises carrying out a co-precipitation process by combining and mixing a precipitant, metal salts corresponding to metal M', and optionally a complexing agent, all in the form of aqueous solutions, to form a reaction mixture under reaction conditions, said reaction conditions including a non-oxidative environment, a temperature of the reaction mixture of 75-85°C, and a pH value of the reaction mixture of 10.0-12.5 as measured at 20°C, for 17-24 hours, until a slurry with a liquid phase and a solid phase containing particles with a median particle size D50 of 8-20 µm and a solid content of at least 750 g/L in the slurry is obtained.

2. The method according to claim 1, wherein the aqueous solutions are supplied simultaneously into a reaction vessel having an effective volume (V), and wherein the Ni, Mn, and Co salts are supplied at an average flow rate (R) such that a ratio of the average flow rate (R), expressed in moles per hour (mol/hr) to the effective volume (V) of the reactor vessel, expressed in liters (L), is at least 0.25, preferably 0.30, more preferably 0.35 (mol/hr/L).

3. The method according to claim 1 or 2, wherein during the co-precipitation process, a portion of the liquid phase of the slurry, preferably in several fractions, is withdrawn from the reactor vessel; preferably
the aqueous solutions are supplied continuously , and the portion of the liquid phase is withdrawn continuously or discontinuously.

4. The method according to any of preceding claims, wherein A further comprises one or more elements selected from Ba, Ca, Ce, Cr, La, Mg, Mo, Nb, Sr, Ti, Y, V, W, and Zn; alternatively, A consists of Al.

5. The method according to any of preceding claims, wherein 0.002≤z, more preferably 0.004≤z, even more preferably 0.005≤z, and most preferably 0.010≤z; and/or z≤0.080, preferably z≤0.060, more preferably z≤0.040.

6. The method according to any of preceding claims 1-5, wherein the complexing agent is ammonia and the reaction mixture has a NH_{3(aq)} concentration of 5-12 g/L.

7. The method according to any of preceding claims, further comprising prior to step a), providing a slurry having seed particles have a median particle size D_{c}50 of 1.5-6.0 µm, being metal M_{c}' -based compound, being hydroxide, oxyhydroxide, oxide, or any combination thereof, wherein the metal M_{c}' is presented by Ni_{1-cx-cy-cz}Mn_{cx}Co_{cy}A_{cz}, wherein 0.30≤1-cx-cy-cz≤0.99, 0≤cx≤0.85, 0≤cy≤0.40, and 0≤cz≤0.10.

8. A particulate material comprising metal M' -based compound, being hydroxide, oxyhydroxide, oxide, or any combination thereof, wherein the metal M' is presented by Ni_{1-x-y-z}MnₓCo_{y}A_{z}, wherein 0.30≤1-x-y-z≤0.99, 0.01≤x≤0.85, 0.01≤y≤0.40, A comprising Al with 0.001≤z≤0.100; and wherein the particulate material has a median particle size D50 of 8-20 µm, a specific surface area of at least 4 m²/g as determined by BET, and a total pore volume of more than 0.01 cm³/g as determined from nitrogen adsorption measurement and calculated according to the BJH; preferably the particulate material is obtained by the method according to any of claims 1-7.

9. The particulate material according to claim 8, wherein the specific surface area is at most 12 m²/g, preferably at most 10 m²/g.

10. The particulate material according to any of claims 8-9, wherein the total pore volume is at most 0.05 cm³/g, preferably at most 0.04 cm³/g.

11. The particulate material according to any of claims 8-10, having a Na content of less than 500 g/L, preferably less than 400 g/L, more preferably less than 300 g/L, even more preferably less than 200 g/L, and most preferably less than 100 g/L.

12. The particulate material according to any of claims 8-11, having a span value, calculated by (D90-D10)/D50, of at most 0.30, preferably at most 0.28, more preferably at most 0.26.

13. The particulate material according to any of claims 8-12, wherein 0.50≤1-x-y-z, more preferably 0.60≤1-x-y-z, even more preferably 0.75≤1-x-y-z, and most preferably 0.85≤1-x-y-z.

14. A method of manufacturing a cathode active material, comprising the steps of:
- mixing the particulate material according to any of claims 8-13 or obtained by the method according to any of claims 1-7, a lithium source, and optionally a dopant source to obtain a mixture,
- heating the mixture in oxidizing atmosphere at a temperature between 650°C to 1000°C to obtain the cathode active material, and optionally,
- the method further comprising a heat treatment step before the mixing, wherein the particulate material is heated at a temperature of 105 °C to 750 °C.

15. The method of manufacturing the cathode active material according to claim 14, further comprising preparation steps of:
- conducting the method according to any of claims 1-7,
- processing the slurry by filtering, washing, and drying, thereby obtaining the particulate material.
